# EUROPEAN PATENT APPLICATION

(11) **EP 2 680 514 A1**
(43) Date of publication of application: **01.01.2014**
(21) Application number: 13171941.1
(22) Date of filing: 14.06.2013
(51) Int. Cl.: H04L 12/70

(54) **A method and a device for detecting originators of data frame storms**

(30) Priority: 29.06.2012 FI 20125761
(71) Applicant: Tellabs Oy, 02630 Espoo (FI)
(72) Inventor: Silvola, Mika, 90450 Kempele (FI)
(74) Representative: Berggren Oy Ab

(57) **Abstract**

A device for detecting originators of a data frame storm comprises a processing system (108) configured to detect the data frame storm on the basis of amount of data frames received from various originators. The processing is system is further configured to carry out the following actions when the storm is detected: identify an originator of each received data frame, update a measurement value related to the identified originator, and detect, on the basis the updated measurement value, whether the identified originator is an originator of the data frame storm. Therefore, it is first detected whether a storm of data frames is in general present and, if yes, it is detected, concerning each originator, whether the originator under question is an originator of the data frame storm. The originator-specific detections make it possible to direct restriction actions to data frames related to those originators which cause the data frame storm.

## Description

### Field of the invention

The invention relates generally to managing data frame storms which may be caused by, for example but not necessarily, misconfigurations and/or topology changes in a data transfer network. More particularly, the invention relates to a method and a device for detecting originators of data frame storms. Furthermore, the invention relates to a computer program for detecting originators of data frame storms. Furthermore, the invention relates to a network element, e.g. a router or a switch, of a data transfer network.

### Background

Interconnections and operations in a data transfer network can create situations where misconfigurations and/or topology changes may cause that some network elements begin to excessively and uncontrollably broadcast and/or multicast data frames. For example, some network elements operating on the Open System Interconnection "OSI" Level 2, i.e. the "L2 data link layer", may begin to uncontrollably broadcast or multicast data frames to network elements operating on the Open System Interconnection "OSI" Level 3, i.e. the "L3 network layer". A network element operating at the L2 data link layer can be, for example, an Ethernet switch, and a network element operating at the L3 network layer can be, for example, an Internet Protocol "IP" router. In situations of the kind described above, the uncontrollably broadcast and/or multicast data frames constitute a data frame storm which may disturb or even prevent the operation of destination network elements. The data frames of the storm may cause a severe congestion, for example, in a queuing system where data frames are waiting for an access to a central processor unit "CPU" of a network element. A corollary of the congestion can be such that not only data frames of the storm but also data frames which are not related to the storm are dropped out from the queuing system. The non-storm related data frames may be important, for example, from the viewpoint of control-plane operations of a data transfer network. Therefore, the dropping of the non-storm related data frames may be detrimental to the operation of the network element or even to the operation of the whole data transfer network. Hence, it is important to be able to direct restriction and/or blocking actions to storm related data frames in order to avoid the above-described situation where non-storm related data frames are lost.

Publication W02012056816 describes a system for detecting data frame storms in a data transfer network. The system comprises a controller for detecting an increase of data traffic on the basis of statistical information acquired periodically from network elements of the data transfer network. When an increase is detected, the controller activates a storm detection mode. In the storm detection mode, data frames are randomly extracted as sample data frames from relevant network elements for a pre-determined period of time. The controller determines whether any one of a broadcast storm, a multicast storm, and a unicast storm occurs, on the basis of the sample data frames. When any one of the storms occurs, it is assessed that a data frame storm occurs, and restriction actions are directed to the network elements originating the data frame storm. An inconveniency related to the above-described system is that the statistical information has to be acquired from network elements that may be located in a very distributed manner in the data transfer network. Furthermore, these network elements are controlled in a centralized manner by the above-mentioned controller. These facts are challenging from the viewpoint of scalability of the system to large data transfer networks which may comprise even thousands of network elements.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the first aspect of the invention there is provided a new method for detecting one or more originators of a data frame storm. The method comprises:
- detecting a data frame storm on the basis of amount of data frames related to various originators and received at a network element,
- identifying an originator of a received data frame in response to the detection of the data frame storm,
- updating a measurement value related to the identified originator, and
- detecting, on the basis the updated measurement value, whether the identified originator is an originator of the detected data frame storm.

An incoming flow of data frames related to the identified originator can be limited or blocked so as to avoid congestion and thereby to reduce the risk of losing non-storm related data frames, when the identified originator is detected to be an originator of the data frame storm.

The above-described method can be run, for example, at each network element independently of other network elements. Therefore, the method is scalable to large data transfer networks which may comprise even thousands of network elements.

In the above-described method, the operation is two-phased so that it is detected whether a data frame storm is present and, if yes, it is detected, concerning each originator, whether the originator under consideration is an originator of the data frame storm. This two-phased operation facilitates avoiding unnecessary restriction actions directed to incoming data frames because the originator-specific detections and possible restriction actions are carried out in response to a situation where the data frame storm has been detected to be present, e.g. the reception rate of data frames related to various originators exceeds a pre-determined rate-threshold. Therefore, unnecessary restriction actions directed to incoming data frames related to a particular originator can be avoided for example when merely a burst of data frames related to this originator happens to take place whereas the other originators are so silent that actually no data frame storm is taking place. On the other hand, when a data frame storm takes place, the originator-specific detections make it possible to direct the restriction actions to data frames related to those originators which cause the data frame storm.

In accordance with the second aspect of the invention there is provided a new device for detecting one or more originators of a data frame storm. The device comprises a processing system configured to:
- detect a data frame storm on the basis of amount of data frames related to various originators and received at a network element,
- identify an originator of a received data frame in response to a detection of the data frame storm,
- update a measurement value related to the identified originator, and
- detect, on the basis the updated measurement value, whether the identified originator is an originator of the detected data frame storm.

The device can be a part of a network element, e.g. a router or a switch, of a data transfer network. It is also possible that the device is a separate apparatus that is connected to a network element.

In accordance with the third aspect of the invention there is provided a new network element that comprises at least one ingress port for connecting to a data transfer network, a central processor unit for performing processes related to data transfer protocols being used, and a processing system configured to:
- detect a data frame storm on the basis of amount of data frames related to various originators and received at the network element,
- identify an originator of each received data frame in response to a detection of the data frame storm,
- update a measurement value related to the identified originator, and
- detect, on the basis the updated measurement value, whether the identified originator is an originator of the data frame storm,
wherein the network element is configured to restrict or block access of data frames related to the identified originator to the central processor unit in response to a situation in which the identified originator is detected to be an originator of the data frame storm.

In accordance with the fourth aspect of the invention there is provided a new computer program for detecting one or more originators of a data frame storm. The computer program comprises computer executable instructions for controlling a programmable processor to:
- detect a data frame storm on the basis of amount of data frames related to various originators and received at a network element,
- identify an originator of a received data frame in response to a detection of the data frame storm,
- update a measurement value related to the identified originator, and
- detect, on the basis the updated measurement value, whether the identified originator is an originator of the data frame storm.

A computer program product according to the invention comprises a non-volatile computer readable medium, e.g. a compact disc ("CD"), encoded with a computer program according to the invention.

A number of non-limiting exemplifying embodiments of the invention are described in accompanied dependent claims.

Various non-limiting exemplifying embodiments of the invention both as to constructions and to methods of operation, together with additional objects and advantages thereof, will be best understood from the following description of specific exemplifying embodiments when read in connection with the accompanying drawings.

The verbs "to comprise" and "to include" are used in this document as open limitations that neither exclude nor require the existence of unrecited features. The features recited in depending claims are mutually freely combinable unless otherwise explicitly stated.

### Brief description of figures

The exemplifying embodiments of the invention and their advantages are explained in greater detail below in the sense of examples and with reference to the accompanying drawings, in which:
figure 1 shows a schematic illustration of an exemplifying data transfer system comprising a network element which is provided with a device according to an exemplifying embodiment of the invention for detecting one or more originators of a data frame storm, and
figure 2 shows a flow chart of a method according to an exemplifying embodiment of the invention for detecting one or more originators of a data frame storm.

### Description of exemplifying embodiments

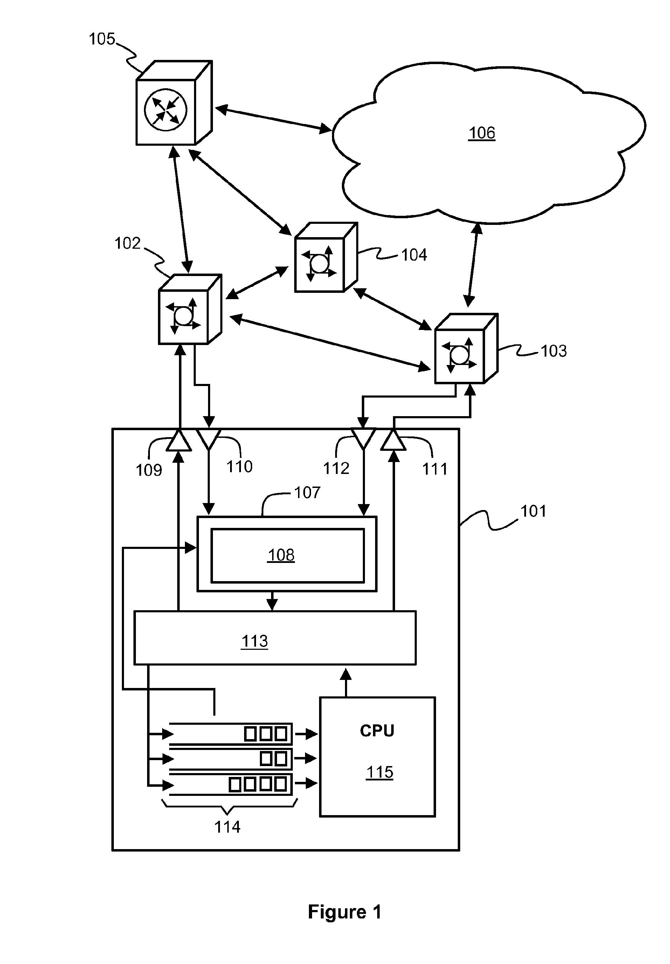

Figure 1 shows a schematic illustration of an exemplifying data transfer system that comprises network elements 101, 102, 103, 104, and 105, where the network elements 103 and 105 are connected to a data transfer network 106 that may comprise several other network elements interconnected to each other via data transfer links. Each network element can be, for example but not necessarily, an Internet Protocol "IP" router, an Ethernet switch, and/or a MultiProtocol Label Switching "MPLS" switch. In the exemplifying case shown in figure 1, it is assumed that the network elements 102-104 are network elements operating on the Open System Interconnection "OSI" Level 2, i.e. on the "L2 data link layer". These network elements 102-104 can be, for example, Ethernet switches. It is further assumed that the network elements 101 and 105 are operating, in addition to the L2 data link layer, also on the Open System Interconnection "OSI" Level 3, i.e. on the "L3 network layer". These network elements 101 and 105 can be, for example, Internet Protocol "IP" routers. The network element 101 comprises ingress ports 110 and 112, and egress ports 109 and 111 for connecting to other network elements of the data transfer system. The network element 101 comprises a network processor 113 for performing forwarding-plane operations related to the data transfer protocols being used, e.g. the Internet Protocol "IP" and Ethernet. The network element 101 comprises a central processor unit "CPU" 115 for performing, among others, control-plane operations related to the data transfer protocols being used. The network element 101 comprises a queuing system 114, where data frames are waiting for an access to the central processor unit 115.

Interconnections and operations in the exemplifying data transfer system shown in figure 1 can create situations where misconfigurations and/or topology changes may cause that some network elements begin to excessively and uncontrollably broadcast and/or multicast data frames. For example, the network elements 102-104 may begin to uncontrollably broadcast or multicast L2 data link layer data frames, e.g. Ethernet frames, to the network elements 101 and 105. The uncontrollably broadcast and/or multicast data frames constitute a data frame storm which might, unless appropriately managed, disturb or even prevent the operation of the network element 101 and/or 105. Without proper management, the data frames of the storm could cause a severe congestion, for example, on the queuing system 114, where data frames are waiting for an access to the central processor unit 115 of the network element 101. A corollary of the congestion can be such that not only data frames of the storm but also data frames which are not related to the storm may be dropped out from the queuing system 114.

The network element 101 comprises a device 107 according to an exemplifying embodiment of the invention for detecting one or more originators of a data frame storm. The device comprises a processing system 108 configured to detect a data frame storm on the basis of amount of data frames related to various originators and received at the network element 101. An originator of a data frame can be defined to be, for example, a transmission port related to the data frame under consideration, a virtual local access network "VLAN" related to the data frame, or a VLAN-transmission port - pair related to the data frame. The transmission port can be, for example, a physical or virtual Ethernet interface, a VLAN inside a physical or virtual Ethernet interface, or a VLAN inside a VLAN. For another example, the originator of a data frame can be defined to be the MAC-SA related to the data frame or the combination of the MAC-SA and the MAC-DA related to the data frame, where the MAC-SA and the MAC-DA are the Media Access Control Source Address and the Media Access Control Destination Address, respectively.

The processing system 108 can be, for example, configured to determine a reception rate of data frames received from different originators and compare the determined reception rate, e.g. frames/second, to a pre-determined rate-threshold so as to detect the data frame storm. For a second example, the processing system 108 can be configured to compare a number of received data frames waiting for processes related to data transfer protocols to a pre-determined number-threshold so as to detect the data frame storm. The received data frames waiting for the processes related to the data transfer protocols can be, for example, the data frames in the queuing system 114. For a third example, the processing system 108 can be configured to compare an increase rate of the number of the received data frames waiting for the processes related to the data transfer protocols to a pre-determined increase-threshold so as to detect the data frame storm.

The processing system 108 is configured to identify the originators of received data frames in response to a situation in which a data frame storm has been detected to be present. The processing system 108 can be configured to identify, for example, a number of a transmission port related to a received data frame and/or a virtual local access network "VLAN" related to the received data frame. For example, in conjunction with Ethernet frames, the transmission port number can be identified from information associated to the Ethernet frames when they are received, and the VLAN can be identified from the S-TAG of the Ethernet frame and/or from the above-mentioned information associated to the Ethernet frames. The processing system 108 is configured to update a measurement value related to the identified originator, and to detect, on the basis the updated measurement value, whether the identified originator is an originator of the data frame storm.

The measurement value can be, for example, a number of data frames related to the identified originator and received within a measuring time period. In this case, the processing system 108 can be configured to initialize the measurement value to have a pre-determined starting value, e.g. zero, at the beginning of the measuring time period, and change the measurement value with a pre-determined update value, e.g. one, in response to each data frame related to the identified originator and received within the measuring time period. The processing system 108 is preferably configured to compare the updated measurement value prevailing at the end of the measuring time period to a detection-threshold related to the identified originator so as to detect whether the identified originator is an originator of the data frame storm. In a device according to an exemplifying embodiment of the invention, the processing system 108 is configured to start a new measuring time period in response to a situation in which the data frame storm is detected to be present at the end of the elapsed measuring time period. In this exemplifying embodiment of the invention, the recognition of the originators of the data frame storm can be kept up-to-date with changes among the originators of the data frame storm.

For another example, each measurement value can be a leaky or filling bucket-type variable used for measuring a load coming from an originator related to this measurement value. In this case, the processing system 108 can be configured to initialize the measurement value to have a pre-determined starting value at the beginning of a measuring time period, change the measurement value at a pre-determined rate in a first direction of change during the measuring time period, and change the measurement value with a pre-determined update value in a second direction of change opposite to the first direction in response to each data frame related to the originator under consideration and received within the measuring time period. The first direction of change can be e.g. decreasing the measurement value, in which case the second direction of change is increasing the measurement value, or vice versa. The processing system 108 can be configured to compare the updated measurement value prevailing at the end of the measuring time period to a detection-threshold related to the originator so as to detect whether the originator is an originator of a data frame storm. In a device according to an exemplifying embodiment of the invention, the processing system 108 is configured to start a new measuring time period in response to a situation in which the data frame storm is detected to be present at the end of the elapsed measuring time period. On the other hand, when using a leaky or filling bucket-type variable as the measurement value, it is possible that the measuring period covers the whole time period when the data frame storm is detected to be present, and the dynamically changing measuring value can be continuously compared to the detection-threshold.

In a device according to an exemplifying embodiment of the invention, the processing system 108 is configured to restrict or block an incoming flow of data frames related to a particular originator, e.g. a VLAN and/or a transmission port, when the originator under consideration is detected to be an originator of a data frame storm. For example, the processing system 108 can be configured to restrict or block the access of these data frames to the queuing system 114 and thereby to the central processor unit 115. In a device according to another exemplifying embodiment of the invention, the processing system 108 is configured to instruct an external device, e.g. the network processor 113, to restrict or block an incoming flow of data frames related to a particular originator when the originator under consideration is detected to be an originator of a data frame storm. Slow path processing related to the L3 network layer and carried out by the central processor unit 115 represents an example of processes which are preferably protected against data frame storms with the aid of the above-mentioned restriction and/or blocking actions. The restriction and/or blocking actions can be ended, for example, automatically after a timeout or by a user action. Originators, e.g. VLANs and/or transmission ports, which are subjected to restriction and/or blocking actions are preferably reported and logged via a management system.

In some cases, the above-described restriction and/or blocking actions can be directed to a broader group of incoming data frames than only the group of those data frames which are related to an originator detected to be responsible for a data frame storm. For example, all incoming data frames related to a certain VLAN may be subject to restriction and/or blocking actions when only one of transmission ports related to this VLAN has been detected to be responsible for a data frame storm. This naturally causes undesirable loss of data frames not related to the data frame storm but this can be sometimes reasoned on the basis of e.g. issues relating to implementation of the device.

In some situations it is possible that, in spite of a data frame storm, none or only few of the originator-specific measurement values reach the corresponding detection-threshold. As a corollary, none or only few of the originators, e.g. VLANs and/or transmission ports, are detected to be originators of the data frame storm. Therefore, possible restriction and/or blocking actions, if any, are directed to data flows of only few originators. In this case, congestion caused by the data frame storm may continue to take place in the network element 101 because possible restriction and/or blocking actions, if any, may be insufficient. For example, the queuing system 114 may stay congested.

In a device according to an exemplifying embodiment of the invention, the processing system 108 is configured to update one or more of the detection-thresholds on the basis of recorded values of the corresponding measurement values in response to a situation in which congestion caused by the data frame storm keeps taking place in the network element 101. In an exemplifying case, where a measurement value is a number of data frames related to the corresponding originator and received within a measuring time period, the corresponding detection-threshold can be updated so that the new detection-threshold is α × the maximum of the measurement value occurred during the last elapsed measuring time period. The factor α is preferably a positive value less than one, and it can be e.g. 0.75. If, for example, a measurement value has not reached the corresponding detection-threshold and thus no restriction and/or blocking action is directed to the data flow of the corresponding originator, and the congestion caused by the data frame storm continues to take place, the measurement value will reach the updated detection-threshold, i.e. α × the maximum, within the next measuring time period at least in a case where properties of the said data flow remain substantially similar. Thus, the restriction and/or blocking actions will be directed to the said data flow after the detection has been carried out using the updated detection-threshold. The measurement value can be determined on the basis of received data frames prior to applying the possible restriction and/or blocking actions, i.e. data frames which are blocked contribute, however, the measurement value. Alternatively, the measurement value can be determined on the basis of received data frames after applying the possible restriction and/or blocking actions, i.e. data frames which have been blocked do not contribute the measurement value. In the first case, successive adaptations of a detection-threshold related to a particular originator can be carried out by decreasing the factor α as long as the congestion caused by the data frame storm continues to take place. In the second case, the successive adaptations of the detection-threshold can be carried out by using a constant factor α < 1 during successive time periods as long as the congestion caused by the data frame storm continues to take place.

In a device according to an exemplifying embodiment of the invention, the processing system 108 is configured to repeat the following set of actions in response to the detection of the data frame storm:
- identifying an originator of a received data frame,
- updating a measurement value related to the identified originator, and
- detecting, on the basis the updated measurement value, whether the identified originator is an originator of the detected data frame storm
so that, at each repeating time, received data frames under consideration are the data frames related to the originator that was detected to be an originator of the data frame storm when the above-mentioned set of actions was previously carried out, and originators of the data frames under consideration are sub-originators of the originator that was detected to be the originator of the data frame storm when the set of actions was previously carried out. The above-described operation provides gradual definition of the originator of the data frame storm. For example, a VLAN responsible for the data frame storm can be defined when the above-mentioned set of actions are carried out for the first time, and a MAC-SA responsible for the data frame storm can be defined from among various MAC-SAs related to this VLAN when the above-mentioned set of actions are carried out for the second time. For another example, a VLAN responsible for the data frame storm can be defined when the above-mentioned set of actions are carried out for the first time, a transmission port responsible for the data frame storm can be defined from among various transmission ports related to this VLAN when the above-mentioned set of actions are carried out for the second time, and a MAC-SA responsible for the data frame storm can be defined from among various MAC-SAs related to this transmission port when the above-mentioned set of actions are carried out for the third time.

The above-described recognition of originators of data frame storms and corresponding restriction and/or blocking actions can be carried out concerning data frames received at all ingress ports of the network element 101 or concerning data frames received at part of the ingress ports of the network element, where each ingress port can be either a physical ingress port or a logical ingress port. Furthermore, the recognition and the corresponding restriction and/or blocking actions can be carried out separately for different ingress ports, i.e. per ingress port basis, where each ingress port can be either a physical ingress port or a logical ingress port.

The processing system 108 shown in figure 1 can be implemented with one or more programmable processor circuits, one or more dedicated hardware circuits such as an application specific integrated circuit "ASIC", one or more field programmable logic circuits such as a field programmable gate array "FPGA", or a combination of these. Furthermore, it is also possible that the processing system 108 is implemented with the aid of same processor hardware that is used for performing forwarding- and/or control-plane processes related to data transfer protocols being used, e.g. IP, Ethernet, MPLS.

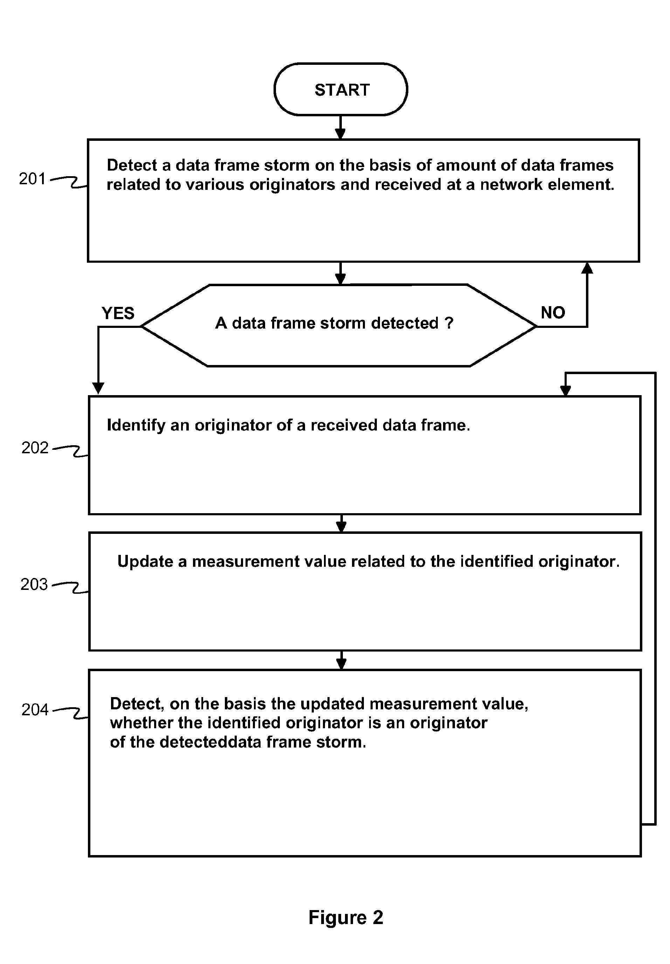

Figure 2 shows a flow chart of a method according to an exemplifying embodiment of the invention for detecting one or more originators of a data frame storm. The method comprises the following actions:
- action 201: detecting a data frame storm on the basis of amount of data frames related to various originators and received at a network element,
   in response to the detection of the data frame storm, the following actions are carried out:
- action 202: identifying an originator of a received data frame,
- action 203: updating a measurement value related to the identified originator, and
- action 204: detecting, on the basis the updated measurement value, whether the identified originator is an originator of the detected data frame storm.

A method according to an exemplifying embodiment of the invention further comprises restricting or blocking an incoming flow of data frames related to the identified originator in response to a situation in which the identified originator is detected to be an originator of the data frame storm.

A method according to an exemplifying embodiment of the invention further comprises restricting or blocking the access of the data frames related to the identified originator to a central processor unit of the network element in response to the situation in which the identified originator is detected to be an originator of the data frame storm.

A method according to an exemplifying embodiment of the invention comprises comparing the updated measurement value to a detection-threshold related to the identified originator so as to detect whether the identified originator is an originator of the data frame storm.

A method according to an exemplifying embodiment of the invention further comprises updating the detection-threshold on the basis of a recorded value of the measurement value if congestion caused by the data frame storm keeps taking place in the network element.

A method according to an exemplifying embodiment of the invention comprises the following actions so as to generate the updated measurement value related to the identified originator:
- initializing the measurement value to have a pre-determined starting value at a beginning of a measuring time period, and
- changing the measurement value with a pre-determined update value in response to each data frame related to the identified originator and received within the measuring time period.

A method according to an exemplifying embodiment of the invention comprises the following actions so as to generate the updated measurement value related to the identified originator:
- initializing the measurement value to have a pre-determined starting value at a beginning of a measuring time period,
- changing the measurement value at a pre-determined rate in a first direction of change during the measuring time period, and
- changing the measurement value with a pre-determined update value in a second direction of change opposite to the first direction in response to each data frame related to the identified originator and received within the measuring time period.

A method according to an exemplifying embodiment of the invention comprises determining a reception rate of data frames originated by different originators, and comparing the determined reception rate to a pre-determined rate-threshold so as to detect the data frame storm.

A method according to an exemplifying embodiment of the invention comprises comparing a number of received data frames waiting for processes related to data transfer protocols to a pre-determined number-threshold so as to detect the data frame storm.

A method according to an exemplifying embodiment of the invention comprises comparing an increase rate of a number of received data frames waiting for processes related to data transfer protocols to a pre-determined increase-threshold so as to detect the data frame storm.

A method according to an exemplifying embodiment of the invention comprises identifying at least one of the following to represent the originator of the received data frame: a number of a transmission port related to the received data frame, an identifier of a virtual local access network "VLAN" related to the received data frame.

A computer program according to an exemplifying embodiment of the invention comprises computer executable instructions for controlling a programmable processor to carry out a method according to any of the above-described embodiments of the invention.

A computer program according to an exemplifying embodiment of the invention comprises software modules for controlling a programmable processor to detect one or more originators of a data frame storm. The software modules comprise computer executable instructions for controlling the programmable processor to:
- detect a data frame storm on the basis of amount of data frames related to various originators and received at a network element,
- identify an originator of a received data frame in response to a detection of the data frame storm,
- update a measurement value related to the identified originator, and
- detect, on the basis the updated measurement value, whether the identified originator is an originator of the detected data frame storm.

The software modules can be, for example, subroutines and functions generated with a suitable programming language.

A computer program product according to an exemplifying embodiment of the invention comprises a non-volatile computer readable medium, e.g. a compact disc ("CD"), encoded with the above-mentioned software modules.

A signal according to an exemplifying embodiment of the invention is encoded to carry information defining a computer program according to an embodiment of the invention.

The specific examples provided in the description given above should not be construed as limiting the applicability and/or the interpretation of the appended claims.

## Claims

1. A device (107) for detecting one or more originators of a data frame storm, the device comprising a processing system (108) configured to:
- detect a data frame storm on the basis of amount of data frames related to various originators and received at a network element, and
- identify an originator of a received data frame in response to a detection of the data frame storm,
**characterized in that** the processing system is further configured to carry out the following actions in response to the detection of the data frame storm:
- update a measurement value related to the identified originator, and
- detect, on the basis of the updated measurement value, whether the identified originator is an originator of the detected data frame storm.

2. A device according to claim 1, wherein the processing system is configured to restrict or block an incoming flow of data frames related to the identified originator in response to a situation in which the identified originator is detected to be an originator of the data frame storm.

3. A device according to claim 2, wherein the processing system is configured to restrict or block the access of the data frames related to the identified originator to a central processor unit of the network element in response to the situation in which the identified originator is detected to be an originator of the data frame storm.

4. A device according to any of claims 1-3, wherein the processing system is configured to compare the updated measurement value to a detection-threshold related to the identified originator so as to detect whether the identified originator is an originator of the data frame storm.

5. A device according to claim 4, wherein the processing system is configured to update the detection-threshold on the basis of a recorded value of the measurement value in response to a situation in which congestion caused by the data frame storm keeps taking place in the network element.

6. A device according to any of claims 1-5, wherein the processing system is configured to:
- initialize the measurement value to have a pre-determined starting value at a beginning of a measuring time period, and
- change the measurement value with a pre-determined update value in response to each data frame related to the identified originator and received within the measuring time period.

7. A device according to any of claims 1-5, wherein the processing system is configured to:
- initialize the measurement value to have a pre-determined starting value at a beginning of a measuring time period,
- change the measurement value at a pre-determined rate in a first direction of change during the measuring time period, and
- change the measurement value with a pre-determined update value in a second direction of change opposite to the first direction in response to each data frame related to the identified originator and received within the measuring time period.

8. A device according to any of claims 1-7, wherein the processing system is configured to determine a reception rate of the data frames related to various originators and received at the network element, and compare the determined reception rate to a pre-determined rate-threshold so as to detect the data frame storm.

9. A device according to any of claims 1-8, wherein the processing system is configured to compare a number of received data frames waiting for processes related to data transfer protocols to a pre-determined number-threshold so as to detect the data frame storm.

10. A device according to any of claims 1-8, wherein the processing system is configured compare an increase rate of a number of received data frames waiting for processes related to data transfer protocols to a pre-determined increase-threshold so as to detect the data frame storm.

11. A device according to any of claims 1-10, wherein the processing system is configured to identify at least one of the following to represent the originator of the received data frame: a number of a transmission port related to the received data frame, an identifier of a virtual local access network related to the received data frame.

12. A network element (101) comprising:
- at least one ingress port (110, 112) for connecting to a data transfer network,
- a central processor unit (115) for performing processes related to data transfer protocols, and
- a device (107) according to any of claims 1-11 for detecting one or more originators of a data frame storm received at the at least one ingress port,
wherein the network element is configured to restrict or block access of data frames related to the data frame storm to the central processor unit.

13. A network element according to claim 12, wherein the network element is at least one of the following: an Internet Protocol ("IP") router, an Ethernet switch, a MultiProtocol Label Switching ("MPLS") switch.

14. A method for detecting one or more originators of a data frame storm, the method comprising:
- detecting (201) a data frame storm on the basis of amount of data frames related to various originators and received at a network element, and
- identifying (202) an originator of a received data frame in response to the
detection of the data frame storm,
**characterized in that** the method further comprises the following actions in response to the detection of the data frame storm:
- updating (203) a measurement value related to the identified originator, and
- detecting (204), on the basis of the updated measurement value, whether the identified originator is an originator of the detected data frame storm.

15. A computer program for detecting one or more originators of a data frame storm, the computer program comprising computer executable instructions for controlling a programmable processor to:
- detect a data frame storm on the basis of amount of data frames related to various originators and received at a network element, and
- identify an originator of a received data frame in response to a detection of the data frame storm,
**characterized in that** the computer program further comprises computer executable instructions for controlling the programmable processor to carry out the following actions in response to the detection of the data frame storm:
- update a measurement value related to the identified originator, and
- detect, on the basis of the updated measurement value, whether the identified originator is an originator of the detected data frame storm.
